# EUROPEAN PATENT APPLICATION

(11) **EP 4 273 795 A1**
(43) Date of publication of application: **08.11.2023**
(21) Application number: 21930378.1
(22) Date of filing: 20.12.2021
(51) Int. Cl.: G06T 7/00

(54) **TEMPLATE GENERATION DEVICE, COLLATION SYSTEM, COLLATION DEVICE, TEMPLATE GENERATION METHOD, COLLATION METHOD, AND PROGRAM**

(30) Priority: 11.03.2021 JP 2021039417
(71) Applicant: OMRON Corporation, Kyoto 600-8530 (JP)
(72) Inventor: HASEGAWA, Takahiro, Kyoto-shi, Kyoto 600-8530 (JP); AOKI, Go, Kyoto-shi, Kyoto 600-8530 (JP)
(74) Representative: Isarpatent
(86) International application number: PCT/JP2021/047102
(87) International publication number: WO 2022/190533

(57) **Abstract**

A template generation device, which is for generating a template that indicates a feature value of a predetermined object and is used by a collation device for collating the template with a measurement image representing a result of measuring a measurement range including the predetermined object, includes: a first generation means for generating a projection image representing the predetermined object as a two-dimensional image, based on a three-dimensional model of the predetermined object; a feature value acquisition means for acquiring, based on the three-dimensional model or the projection image, a feature value that has been corrected in accordance with an attention degree of each region of the three-dimensional model; and a second generation means for generating the template indicating the feature value corresponding to the projection image.

## Description

### TECHNICAL FIELD

The present invention relates to a template generation device, a collation system, a collation device, a template generation method, a collation method, and a program.

### BACKGROUND ART

There are cases where the position-orientation of an object is recognized by collating a template, which indicates a feature of the object in each orientation, with an image (measurement image) acquired as a result of an image capture device capturing an image of the object (i.e. measuring the object).

Patent Document 1 states that the efficiency of collation processing for recognizing a target object is increased by storing a template indicating the shape of the object and collating the template with the largest flat face of the object in a measurement image.

### CITATION LIST

### PATENT LITERATURE

Patent Literature 1: Japanese Unexamined Patent Application Publication No. 2018-097889

### SUMMARY OF INVENTION

### TECHNICAL PROBLEM

In Patent Document 1, the efficiency of collation processing can be increased by collating the largest flat face with the template, but the collation accuracy may decrease when, for example, a portion of the flat face is hidden by a cover or the like and the image capture device cannot capture an image of this portion.

An object of the present invention is to provide a technology capable of increasing the accuracy of collation between a template and an image of an object.

### SOLUTION TO PROBLEM

To achieve the above-stated object, the invention adopts the following configurations.

That is to say, a template generation device according to an aspect of the present invention is a template generation device for generating a template that indicates a feature value of a predetermined object and is used by a collation device for collating the template with a measurement image representing a result of measuring a measurement range including the predetermined object, and the template generation device includes: a first generation means for generating a projection image representing the predetermined object as a two-dimensional image, based on a three-dimensional model of the predetermined object; a feature value acquisition means for acquiring, based on the three-dimensional model or the projection image, a feature value that has been corrected in accordance with an attention degree of each region of the three-dimensional model; and a second generation means for generating the template indicating the feature value corresponding to the projection image.

According to this configuration, the collation device that uses the template generated by the template generation device can perform collation using a template with an appropriate feature value corresponding to the attention degree of each region. Accordingly, the template can be collated with the measurement image with high accuracy.

The above-described template generation device may further include a setting means for setting a first region having an attention degree lower than an attention degree of another region in the three-dimensional model, and the feature value acquisition means may acquire a feature value obtained by suppressing a feature of the first region. According to this configuration, the collation device that uses the template generated by the template generation device can perform collation without giving importance to a region with a lower attention degree in the template. Accordingly, the template can be collated with the measurement image with high accuracy.

In the above-described template generation device, the setting means may set a region designated by a user as the first region.

In the above-described template generation device, if a proportion of a region having an identical feature in the predetermined object to the predetermined object is greater than or equal to a first value, the setting means may set the region as the first region. According to this configuration, collation can be performed without giving importance to a region that is universally present in a predetermined object. Accordingly, the template can be collated with the measurement image with high accuracy.

In the above-described template generation device, the setting means may set a second region having an attention degree higher than an attention degree of the first region in the three-dimensional model, and the feature value acquisition means may acquire a feature value obtained by enhancing a feature of the second region. According to this configuration, the collation device that uses the template generated by the template generation device can perform collation while giving importance to a region with a higher attention degree in the template. Accordingly, the template can be collated with the measurement image with high accuracy.

In the above-described template generation device, the setting means may set a region having an uneven shape as the second region. According to this configuration, importance can be given, during collation, to a region having an uneven shape that is a typically characteristic region. Accordingly, the template can be collated with the measurement image with high accuracy.

In the above-described template generation device, if a proportion of a region having an identical feature in the predetermined object to the predetermined object is smaller than or equal to a second value, the setting means may set the region as the second region. According to this configuration, importance can be given, during collation, to a region that is characteristic in a predetermined object. Accordingly, the template can be collated with the measurement image with high accuracy.

In the above-described template generation device, the measurement image may be a range image having pixels each representing a distance to a subject.

In the above-described template generation device, the first generation means may generate a plurality of the projection images each representing the predetermined object in a different orientation as a two-dimensional image, and the second generation means may generate the template for each of the plurality of projection images. According to this configuration, templates of a predetermined object seen from various viewpoints can be generated, thereby allowing the collation device to perform collation using templates of many patterns.

A collation system may comprise: the above-described template generation device; and a collation device configured to collate the template generated by the template generation device above with a measurement image representing a result of measuring a measurement range.

In the above-described collation system, the collation device may include: an estimation means for estimating a position-orientation of the predetermined object based on the measurement image; a determination means for determining, based on the position-orientation of the predetermined object estimated by the estimation means, an overlapping region in which the predetermined object overlaps another object in the measurement image; and an updating means for updating the template so as to suppress a feature of a region in the template, the region corresponding to the overlapping region. According to this configuration, the collation device can avoid, during collation, giving importance to a region (so-called occlusion region) where a predetermined object is hidden by another object and that should not be given importance during collation. Accordingly, the template can be collated with the measurement image with high accuracy.

A collation device according to an aspect of the present invention is a collation device comprising: an acquisition means for acquiring a measurement image representing a result of measuring a measurement range including a predetermined object, and a template indicating a feature value of the predetermined object; an estimation means for estimating a position-orientation of the predetermined object based on the measurement image; a determination means for determining, based on the position-orientation of the predetermined object estimated by the estimation means, an overlapping region in which the predetermined object overlaps another object in the measurement image; an updating means for updating the template so as to suppress a feature of a region in the template, the region corresponding to the overlapping region; and a collation means for collating the template updated by the updating means with the measurement image. According to this configuration, the collation device can avoid, during collation, giving importance to a region (so-called occlusion region) where a predetermined object is hidden by another object and that should not be given importance during collation. Accordingly, the template can be collated with the measurement image with high accuracy.

The present invention may also be understood as a device that has at least some of the above-described means, or as an electronic device, a control system, an information processing system, an information processing device, a recognition device, or a recognition system. The present invention may also be understood as a control method, a template generation method, a collation method, or a recognition method that includes at least part of the above-described processing. The present invention may also be understood as a program for implementing such a method, or a recording medium (storage medium) that records that program in a non-transitory manner that program. Note that the above-described means and processing may be combined, to the extent possible, to constitute the present invention.

### ADVANTAGEOUS EFFECTS OF INVENTION

According to the present invention, the accuracy of collation increases when a template of an object is collated with an image of the object.

### BRIEF DESCRIPTION OF THE DRAWINGS

[FIG. 1] FIG. 1 illustrates a collation system according to Embodiment 1.
[FIG. 2] FIG. 2 is a block diagram of a template generation device and a collation device according to Embodiment 1.
[FIG. 3] FIG. 3 is a flowchart of processing performed by the template generation device according to Embodiment 1.
[FIG.4] FIG. 4 is a flowchart of processing performed by the collation device according to Embodiment 1.
[FIG. 5] FIG. 5 is a diagram illustrating a collation system according to Embodiment 2.

### DETAILED DESCRIPTION

Hereinafter, embodiments for implementing the present invention will be described with reference to the drawings.

### <Example Use>

In the following, a collation system 1, which collates a template that indicates feature values of an object based on a three-dimensional model or a two-dimensional image of the object with an image (measurement image) obtained as a result of an image capture device measuring the object, acquires a template with feature values that have been corrected in accordance with an attention degree. For example, the collation system 1 corrects the feature value so as to suppress the feature of a region with a lower attention degree, and corrects the feature value so as to emphasize the feature of a region with a higher attention degree. The collation system 1 then calculates the result of collating the template with the measurement image.

Here, "region with a higher attention degree" refers to a characteristic region such as a region having an uneven shape or a region colored by multiple colors, for example. "Region with a lower attention degree" refers to, for example, a region having a feature that many other regions also have, a region that is highly likely to be overlapped with another object and hidden, or the like. Note that these regions can be set in accordance with an instruction (operation; designation) given by a user.

This enables the collation system 1 to perform collation without giving importance to a region with a lower attention degree in the template. Thus, the collation system 1 can appropriately collate the measurement image with the template by performing collation using a region with a higher attention degree, without giving importance to a region with a lower attention degree. Accordingly, the template can be collated with the measurement image with high accuracy.

### < Embodiment 1>

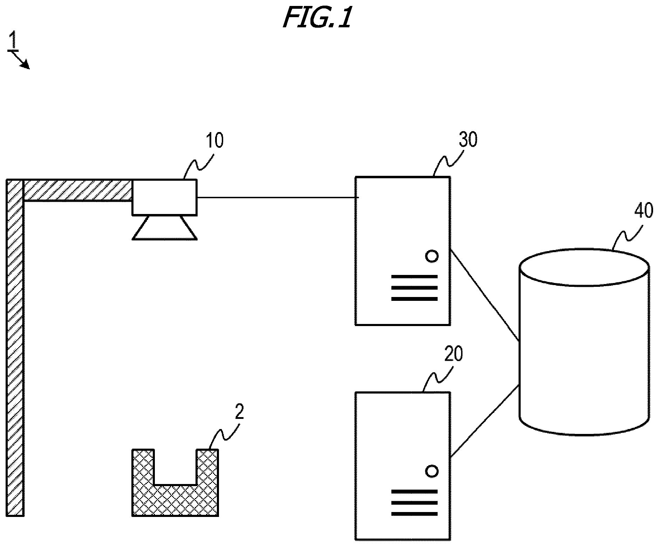

[Configuration of collation system] A configuration of the collation system 1 according to Embodiment 1 will be described with reference to FIG. 1. The collation system 1 recognizes a position-orientation of an object 2 in a measurement image by collating a template of the object 2 with the measurement image obtained by measuring the object 2. The collation system 1 includes an image sensor 10, a template generation device 20, a collation device 30, and a storage device 40. Note that "position-orientation" in this embodiment refers to a position and an orientation, but may alternatively be a position or an orientation if no technical contradiction arises.

The image sensor 10 acquires a measurement image by measuring a measurement range that includes the object 2. The image sensor 10 in this embodiment is a three-dimensional sensor that acquires an image of a subject captured through a left lens and an image of the subject captured through a right lens, and acquires a range image as a measurement image by collating these two images (left and right images) and obtaining the difference therebetween. The range image has pixels each of which indicates a distance from the image sensor 10 to the subject. Note that the image sensor 10 may acquire the range image by any method, such as triangulation measurement or a ToF (Time of Flight) method. The measurement image may alternatively be a temperature image in which each pixel indicates a temperature of the subject, or may be an ordinary optical image (image expressing the color and luminance of the subject).

The template generation device 20 generates a template indicating feature values of the object 2 based on a three-dimensional model obtained by measuring the object 2 in advance, or a three-dimensional model of the object 2 that was used to design the object 2. The three-dimensional model (three-dimensional data) can be data expressing the object 2 with point cloud data.

The collation device 30 performs collation processing using the measurement image obtained by the image sensor 10 and the template generated by the template generation device 20. The collation device 30 also recognizes the current position-orientation of the object 2 based on the collation results. Accordingly, the collation device 30 can also be considered as a recognition device that recognizes the position-orientation of the object 2.

The storage device 40 stores (records) information regarding the three-dimensional model of the object 2, the template generated by the template generation device 20, the results of collation performed by the collation device 30, and/or the position-orientation of the object 2 recognized by the collation device 30. The storage device 40 can be a server that has a hard disk drive (HDD) and a memory (RAM; Random Access Memory). The storage device 40 may alternatively be a storage medium that can be inserted into and removed from the template generation device 20 and the collation device 30. The storage device 40 stores a plurality of templates representing feature values of the object 2 in different orientations (i.e. the object 2 seen from different viewpoints).

### (Internal configuration of template generation device)

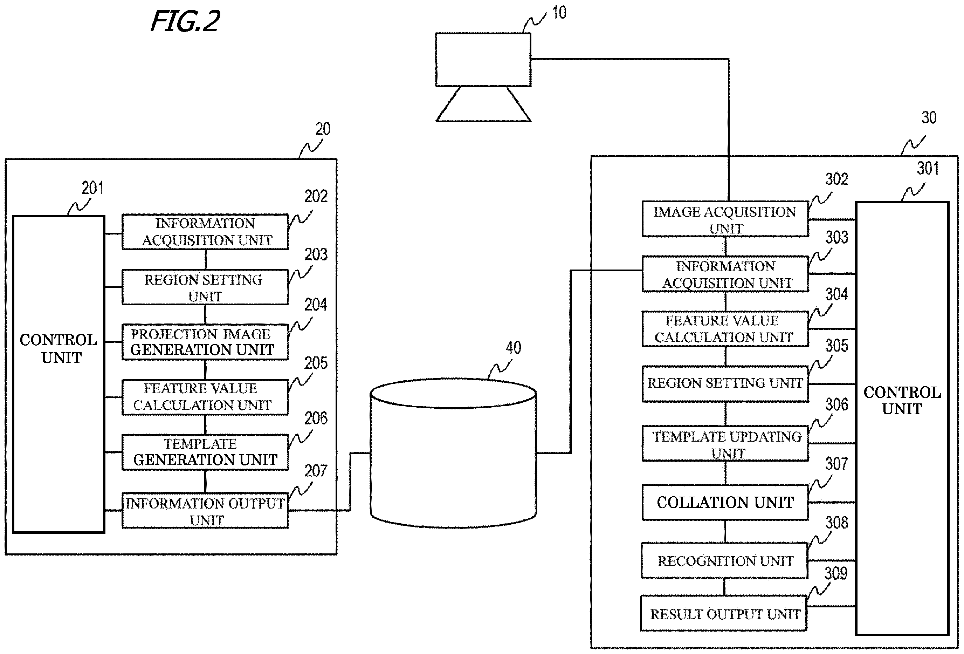

An internal configuration of the template generation device 20 will be described with reference to FIG. 2. The template generation device 20 includes a control unit 201, an information acquisition unit 202, a region setting unit 203, a projection image generation unit 204, a feature value calculation unit 205, a template generation unit 206, and an information output unit 207.

The control unit 201 controls each functional unit of the template generation device 20 in accordance with a program that is stored in the storage medium in a non-transitory manner.

The information acquisition unit 202 acquires a three-dimensional model of the object 2. The information acquisition unit 202 may acquire the three-dimensional model of the object 2 from the storage device 40 or any other external device. The information acquisition unit 202 also acquires imaging parameters (camera focal length, center coordinates of an image, a correction factor for lens distortion) for the image sensor 10.

The region setting unit 203 sets a region with a higher attention degree (region of interest) and a region with a lower attention degree (region of non-interest) in the three-dimensional model.

The projection image generation unit 204 generates a projection image by converting the three-dimensional model to a two-dimensional image. Specifically, the projection image generation unit 204 generates a projection image that is a two-dimensional image representing the object 2 in each orientation when measured by the image sensor 10. Here, since the measurement image changes depending on the imaging parameters for the image sensor 10, the projection image generation unit 204 generates the projection image that has been corrected based on the imaging parameters.

The feature value calculation unit 205 (feature value acquisition unit) calculates (acquires) a feature value of each pixel (each region) of the projection image based on the three-dimensional model or the projection image. Here, the feature value can be an edge feature value (edge direction histogram) or a normal feature value (normal direction histogram). However, this need not be the case, and the feature value may alternatively be distance information, temperature information, or color information. If a region with a higher attention degree (region of interest) or a region with a lower attention degree (region of non-interest) has been set, the feature value calculation unit 205 acquires a feature value of that region that has been corrected in accordance with the attention degree.

The template generation unit 206 generates a template, which is a two-dimensional image in which each pixel indicates a feature value calculated (corrected) by the feature value calculation unit 205. The template generation unit 206 also adds, to the template, information regarding the orientation of the object 2 that corresponds to the projection image on which the template is based.

The information output unit 207 outputs the template generated by the template generation unit 206 to the storage device 40.

Note that the projection image generation unit 204 in this embodiment generates a plurality of projection images based on the three-dimensional model. At this time, the plurality of projection images are two-dimensional images representing the object 2 in different orientations (i.e. the object 2 seen from different viewpoints). The feature value calculation unit 205 then calculates a feature value for each of the projection images. The template generation unit 206 then generates a template for each of the projection images, and the information output unit 207 outputs the plurality of templates to the storage device 40.

### (Internal configuration of collation device)

An internal configuration of the collation device 30 will be described with reference to FIG. 2. The collation device 30 includes a control unit 301, an image acquisition unit 302, an information acquisition unit 303, a feature value calculation unit 304, a region setting unit 305, a template updating unit 306, a collation unit 307, a recognition unit 308, and a result output unit 309.

The control unit 301 controls each functional unit of the collation device 30 in accordance with a program that is stored in the storage medium in a non-transitory manner.

The image acquisition unit 302 acquires a measurement image from the image sensor 10. Note that the image acquisition unit 302 need not acquire the measurement image from the image sensor 10, and may alternatively acquire the measurement image stored in the storage device 40, for example.

The information acquisition unit 303 acquires a plurality of templates from the storage device 40.

The feature value calculation unit 304 calculates a feature value of each pixel (each region) of the measurement image.

The region setting unit 305 determines a region (occlusion region; overlapping region) in the measurement image that is hidden by another object, among regions of the object 2, in accordance with the position-orientation of the object 2 that is roughly estimated by the control unit 301 (recognition unit 308). The region setting unit 305 then sets the occlusion region as a region of non-interest with a lower attention degree.

The template updating unit 306 updates the feature values of the plurality of templates. Specifically, the template updating unit 306 corrects (updates) the feature values in the templates for the region set as a region of non-interest (occlusion region) by the region setting unit 305.

The collation unit 307 collates each of the templates with the measurement image. Specifically, the collation unit 307 calculates a matching degree (similarity degree) between the feature values in the template and the feature values in the measurement image. If an evaluation value is greater than a predetermined value, the collation unit 307 determines that the collation was successful. On the other hand, if the evaluation value is not greater than the predetermined value, the collation unit 307 determines that the collation failed. Note that any collation method may be used for collation using the feature value.

The recognition unit 308 recognizes the position-orientation of the object 2 when the image of the object 2 was captured, based on the template with which the collation unit 307 determined that the collation was successful. Specifically, the recognition unit 308 can recognize the position-orientation of the object 2 when the image was captured, based on information regarding the position-orientation of the object 2 added to the template. The recognition unit 308 may also recognize the position-orientation of the object 2 in more detail by collating the three-dimensional model of the object 2 with the position-orientation used in the template as an initial value, with the object 2 in the measurement image, as will be described later.

The result output unit 309 outputs the collation results and the results of recognizing the position-orientation of the object 2 to the storage device 40 and an external device. For example, if the result output unit 309 outputs the recognition results to a robot or the like for driving the object 2, the robot can perform control to set the object 2 in a predetermined position-orientation in accordance with the position-orientation of the object 2. The result output unit 309 may also output information regarding the updated templates to the storage device 40 and other devices.

The template generation device 20 and the collation device 30 can be constituted by a computer that includes a CPU (processor), a memory, a storage, and the like, for example. In this case, the configuration shown in FIG. 2 is realized by loading a program stored in the storage into the memory and executing the program with the CPU. This computer may be a general-purpose computer, such as a personal computer, a server computer, a tablet terminal, or a smartphone, or may be an embedded computer, such as an on-board computer. Alternatively, all or part of the configuration shown in FIG. 2 may be constituted by an ASIC or FPGA. Alternatively, all or part of the configuration shown in FIG. 2 may be realized by cloud computing or distributed computing.

The template generation device 20 may have the functional units of the collation device 30. That is, the template generation device 20 may generate (update) templates in accordance with the measurement image, and may also perform collation and recognition processing.

### [Processing performed by template generation device]

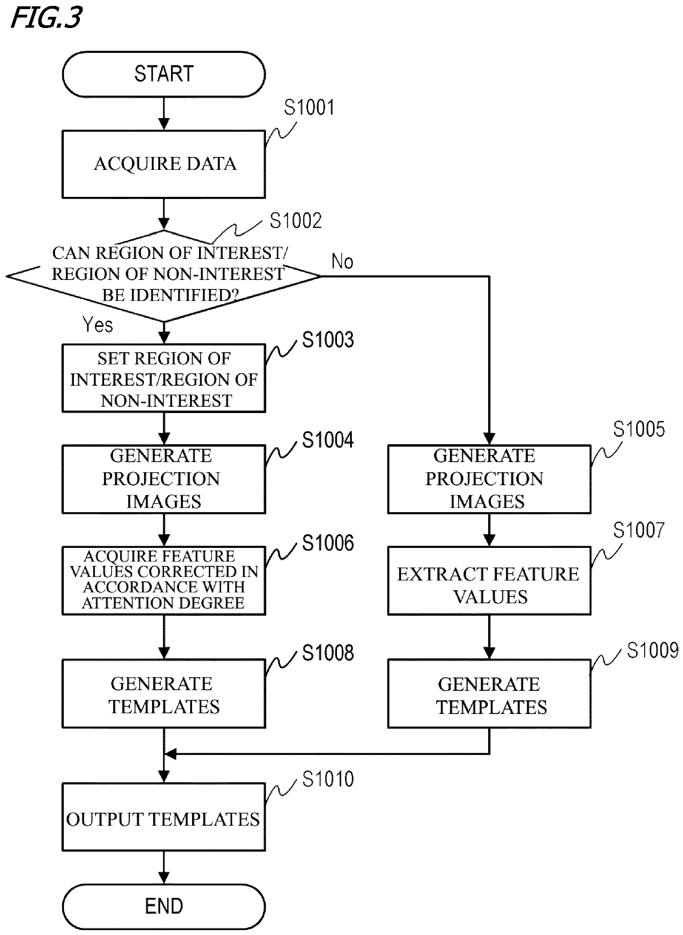

Details of processing performed by the template generation device 20 will be described with reference to the flowchart in FIG. 3. Processing in each step of the flowchart in FIG. 3 is realized by the control unit 201 operating in accordance with a program.

In step S1001, the control unit 201 controls the information acquisition unit 202 and acquires a three-dimensional model of the object 2 and imaging parameters for the image sensor 10. Here, the three-dimensional model can be a three-dimensional model obtained by measuring the object 2 in advance, or a three-dimensional model (CAD data) of the object 2 that was used to design the object 2, as mentioned above.

In step S1002, the control unit 201 determines whether a region of interest or a region of non-interest can be identified in the object 2. For example, if information regarding a region of interest or a region of non-interest has been input in advance by the user, the control unit 201 determines that a region of interest or a region of non-interest can be identified in the object 2. If it is determined that a region of interest or a region of non-interest can be identified in the object 2, processing proceeds to step S1003. If not, processing proceeds to step S1005.

In step S1002, the control unit 201 also may determine whether a region of interest or a region of non-interest can be identified, based on the three-dimensional model of the object 2. Specifically, if there is a region that is to be set as a region of interest or a region of non-interest, the control unit 201 may determine that a region of interest or a region of non-interest can be identified. For example, if the three-dimensional model of the object 2 includes a region with a special feature (unique feature), such as an uneven shape, the control unit 201 desirably sets this region as a region of interest. Alternatively, if the area (surface area) of a region having a first feature in the three-dimensional model of the object 2 is greater than or equal to a first proportion (e.g. 70% or more) of the area (surface area) of the entire object 2 in the three-dimensional model, the control unit 201 desirably sets the region having the first feature as a region of non-interest. Further, if the area of a region having a second feature in the three-dimensional model of the object 2 is smaller than or equal to a second proportion (e.g. 10% or less) of the area of the entire object 2 in the three-dimensional model, the control unit 201 desirably sets the region having the second feature as a region of interest.

In step S1003, the control unit 201 controls the region setting unit 203 and sets a region of interest and/or a region of non-interest. Specifically, if information regarding a region of interest or a region of non-interest has been input in advance by the user, the region setting unit 203 sets a region of interest or a region of non-interest in accordance with the information. Further, if, in step S1002, the control unit 201 has determined a region that is to be a region of interest or a region of non-interest, the region setting unit 203 sets this region as a region of interest or a region of non-interest. Note that the region setting unit 203 may alternatively set an attention degree (importance degree) for each region in the projection image, rather than setting a region of interest or a region of non-interest.

In step S1004, the control unit 201 controls the projection image generation unit 204 and generates, as projection images, a plurality of two-dimensional images corresponding to respective orientations of the object 2, based on the three-dimensional model. That is, the plurality of projection images are two-dimensional images of the object 2 seen from respective viewpoints in the vicinity of the object 2. Step S1005 is the same as step S1004.

In step S1006, the control unit 201 controls the feature value calculation unit 205 and extracts (acquires) a feature value of each pixel (region) of each projection image based on the three-dimensional model or the projection images. Here, the feature value can be a normal feature value representing normal vectors, or an edge feature value representing edge vectors, but may be any type of feature value.

Note that in step S1006, the feature value calculation unit 205 acquires (calculates) a feature value that has been corrected in accordance with the attention degree for each region of the three-dimensional model. Specifically, the feature value calculation unit 205 acquires a feature value for the region of non-interest by performing correction (filtering) to suppress a feature extracted from the three-dimensional model or the projection images. For example, the feature value calculation unit 205 obtains a corrected feature value that is a value obtained by multiplying a feature value extracted from the three-dimensional model or the projection images by a predetermined value (positive number smaller than 1) corresponding to the attention degree, or that is an average feature value in the vicinity of the region of non-interest. Alternatively, the feature value calculation unit 205 may extract a feature value from the region of non-interest after blurring the region of non-interest in the three-dimensional model.

Here, for example, if an edge feature value is used in collation between a template and a measurement image, collation processing is performed by associating regions (positions) that are similar and have a prominent edge feature value (high edge strength) with each other. However, if the edge feature value of the region of non-interest in the template is prominent, there is a likelihood that a region (position) in the measurement image that is not a region (position) to be not originally associated with will be associated with to a region of non-interest in the template. That is, there is a likelihood that the accuracy of collation may decrease. In this regard, the edge feature value of the region of non-interest is lowered if the feature value calculation unit 205 performs a correction (filtering) to suppress the feature of the region of non-interest and then acquires the feature value, as in this embodiment. This reduces the likelihood that the edge feature value of the region of non-interest will be used in the collation or that the edge feature value will influence the collation. That is, the accuracy of collation using the template increases.

Meanwhile, the feature value calculation unit 205 may also acquire a feature value of the region of interest by performing correction to enhance a feature extracted from the three-dimensional model or the projection images. With this, the feature value of the region of interest is more likely to be used in the collation when, for example, an edge feature value is used in the collation. This improves the accuracy of collation using a template since collation using a feature value preferable for the collation is enabled. Here, it is favorable that the degree of suppression or emphasis of a feature is a degree corresponding to the attention degree.

In step S1007, the control unit 201 controls the feature value calculation unit 205 and extracts (acquires) a feature value of each pixel (region) of each projection image based on the three-dimensional model or the projection images without performing a correction in accordance with the attention degree.

In step S1008, the control unit 201 controls the template generation unit 206 and generates a template for each of the plurality of projection images. Specifically, the template generation unit 206 generates, as a template, a two-dimensional image in which each pixel indicates the feature value obtained in step S1006, for each of the projection images.

In step S1009, the control unit 201 controls the template generation unit 206 and generates different templates for the plurality of projection images, similarly to step S1008.

In step S1010, the control unit 201 controls the information output unit 207 and outputs the plurality of templates generated by the template generation unit 206 to the storage device 40. The plurality of templates for the object 2 are thus stored in the storage device 40.

Note that after step S1004, the control unit 201 may set (determine) a region of non-interest and a region of interest in each of the projection images in accordance with the proportion of the area of a region having the same feature to the area of the object 2 appearing in the projection image. That is, if the area of a region having a first feature in the object 2 appearing in the projection image is greater than or equal to a first proportion (e.g. 70% or more) of the area of the entire object 2 appearing in the projection image, the control unit 201 may set the region having the first feature as a region of non-interest. Further, if the area of a region having a second feature of the object 2 appearing in the projection image is smaller than or equal to a second proportion (e.g. 10% or less) of the area of the entire object 2 appearing in the projection image, the control unit 201 may set the region having the second feature as a region of interest.

### [Processing performed by collation device]

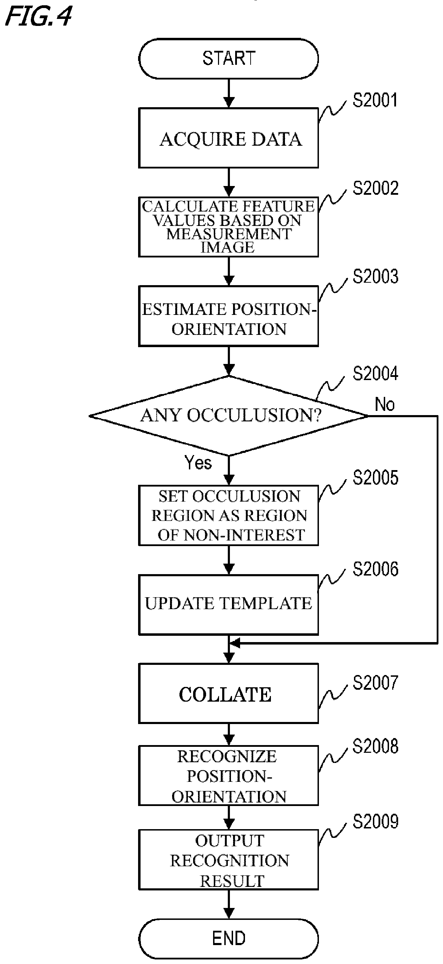

Details of processing performed by the collation device 30 will be described with reference to the flowchart in FIG. 4. Processing in each step of the flowchart in FIG. 4 is realized by the control unit 301 operating in accordance with a program.

In step S2001, the control unit 301 controls the image acquisition unit 302 and acquires a measured image from the image sensor 10. Specifically, the image sensor 10 identifies corresponding pixels in the two left and right images and calculates a difference in position between the corresponding pixels. The image sensor 10 then measures the distance to a subject using the triangulation technique based on the difference in position between the corresponding pixels and the difference in position between left and right lenses. The image sensor 10 can thus acquire a measurement image that is a range image having point cloud data, for example.

The control unit 301 also controls the information acquisition unit 303 and acquires a plurality of templates for the object 2 from the storage device 40. Note that each of the templates may be a template with feature values that have been corrected in the template generation device 20, or a template with feature values that have not been corrected in the template generation device 20. Furthermore, the control unit 301 may also control the image acquisition unit 302 and acquire imaging parameters for the image sensor 10, and/or may control the information acquisition unit 303 and acquire a three-dimensional model of the object 2.

In step S2002, the control unit 301 controls the feature value calculation unit 304 and calculates feature values based on the measurement image (range image).

In step S2003, the control unit 301 estimates the position-orientation of the object 2. For example, the control unit 301 controls the collation unit 307 and the recognition unit 308 and estimates the position-orientation of the object 2 by collating the measurement image with templates in which consideration is not given to information regarding the region of non-interest or the region of interest (i.e. the feature values have not been corrected). The control unit 301 may also estimate the position-orientation of the object 2 based on previous information regarding the position-orientation of the object 2. Here, a rough position-orientation of the object 2 need only be estimated, and therefore, any estimation method may be used.

In step S2004, the control unit 301 determines whether or not a region is present in which the object 2 is hidden by another object (occlusion region; overlapping region) in the measurement image. The control unit 301 can determine the occlusion region based on positional information regarding objects around the object 2 that is set in advance, and the estimated position-orientation of the object 2. If it is determined that an occlusion region is present, processing proceeds to step S2005. If not, processing proceeds to S2007.

In step S2005, the control unit 301 controls the region setting unit 305 and sets the occlusion region determined in step S2004 as a region of non-interest.

In step S2006, the control unit 301 controls the template updating unit 306 and updates the templates. Specifically, the template updating unit 306 regards the occlusion region as the region of non-interest and corrects (updates) the feature values so as to suppress the feature of the occlusion region (region of non-interest) for each template.

Thus, in steps S2005 and S2006, the region setting unit 305 sets the region of non-interest for the templates, and the template updating unit 306 corrects the feature value of the region of non-interest of the template. However, in steps S2005 and S2006, the region setting unit 305 may alternatively set a region of non-interest for the three-dimensional model, and the template updating unit 306 may correct the feature value of the region of non-interest of the three-dimensional model.

Note that processing in steps S2003 to S2006 need not necessarily be performed, and processing may proceed to step S2007 after processing in step S2002 has ended.

In step S2007, the control unit 301 controls the collation unit 307 and collates each of the templates with the measurement image. Here, the collation unit 307 acquires a matching degree (similarity degree) by collating the feature values in the measurement image with the feature values in the template. For example, the collation unit 307 may acquire, as a matching degree, a reciprocal 1/Sum(D) of a total sum Sum(D) of differences D in the feature value of corresponding pixels between the template and the measurement image.

In step S2008, the control unit 301 controls the recognition unit 308 and recognizes the position-orientation of the object 2. Specifically, the recognition unit 308 recognizes, as the orientation of the object 2, the orientation corresponding to the template that has the highest matching degree acquired by the collation unit 307, and recognizes the position of the object 2 based on the position in the measurement image that matches that of the template most closely.

In order to more accurately recognize the position-orientation of the object 2 recognized using the templates, the recognition unit 308 may also recognize the detailed position-orientation of the object 2 by collating the three-dimensional model with the object 2 in the measurement image, with the position-orientation of the object 2 recognized using the template as an initial value. In this case, the recognition unit 308 can collate the three-dimensional model with the measurement image by calculating the correspondence relationship between each point in the three-dimensional model and a corresponding point in the object 2 in the measurement image. For example, an ICP (Iterative Closest Point) algorithm can be used to calculate the correspondence relationship at each point.

In step S2009, the control unit 301 controls the result output unit 309 and outputs information regarding the position-orientation of the object 2 to the storage device 40. The information regarding the position-orientation of the object 2 is thus stored in the storage device 40.

According to this embodiment, the collation device 30 can perform collation using templates with feature values that have been corrected in accordance with the attention degree. Accordingly, the collation device 30 can give more importance to an important region (region of interest) during collation and less importance to a less important region during collation, thus acquiring the collation results more precisely. Accordingly, the collation device 30 can recognize the position-orientation of the object 2 with higher accuracy.

### <Embodiment 2>

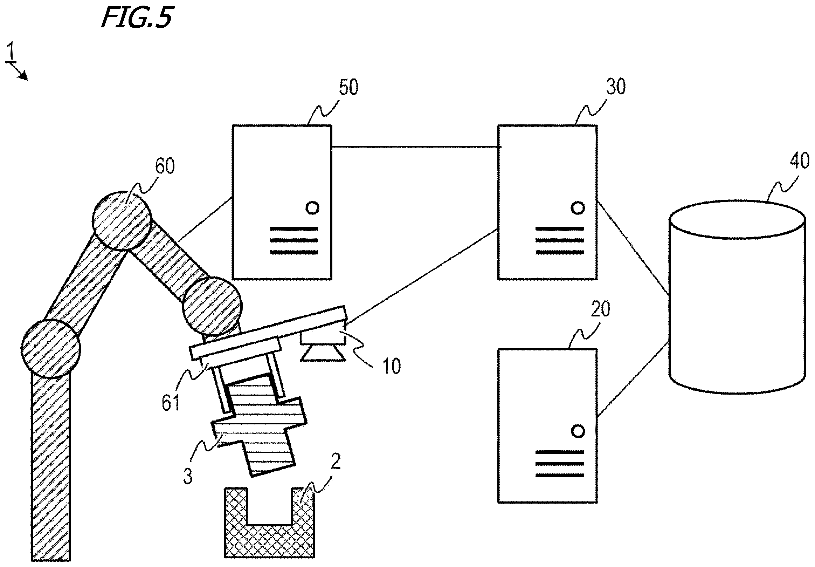

In Embodiment 2, a collation system 1 (robot control system) will be described that connects a held object 3 to the object 2 by a robot 60 controlling the position-orientation of the held object 3, as shown in FIG. 5. The collation system 1 has a robot control device 50 and the robot 60 in addition to the configuration of the collation system 1. In this embodiment, the configurations of the image sensor 10, the template generation device 20, the collation device 30, and the storage device 40 are the same as Embodiment 1.

The robot control device 50 controls the orientation of the robot 60 based on the results of recognizing the position-orientation of the object 2 (object 2 and held object 3). The robot control device 50 controls the robot 60 so as to connect the held object 3, which is held by a holder 61 of the robot 60, to the object 2.

The orientation of the robot 60 is controlled by the robot control device 50. The robot 60 has the holder 61 for holding the held object 3. The image sensor 10 is connected (fixed) to a portion of the holder 61. That is, in this embodiment, the position-orientation of the image sensor 10 changes following a change in the orientation of the robot 60. However, the position-orientation of the image sensor 10 may alternatively be fixed regardless of the orientation of the robot 60.

### [Processing performed by template generation device]

The template generation device 20 in Embodiment 2 generates templates of the object 2 by performing the same processing as that of Embodiment 1. Further, the template generation device 20 also executes the same processing for generating the templates of the object 2 (processing in the flowchart shown in FIG. 3) for the held object 3. The template generation device 20 thus generates templates of the held object 3.

### [Processing performed by collation device]

Since processing performed by the collation device 30 is different from that of Embodiment 1, processing performed by the collation device 30 according to Embodiment 2 will be described in detail with reference to the flowchart in FIG. 4. Note that steps S2003 and S2004 will be described below. As for steps S2005 to S2009, processing was performed only for the object 2 in Embodiment 1, while in Embodiment 2, processing need only be performed for the object 2 and the held object 3. Thus, the description of steps S2005 to S2009 is omitted. Steps S2001 and S2002 are the same as the steps with the same reference numerals in Embodiment 1, and the description thereof is omitted.

In step S2003, the control unit 301 estimates the position-orientations of the object 2 and the held object 3 by the same method as that of Embodiment 1.

In step S2004, the control unit 301 determines whether or not a region is present in which either one of the object 2 and the held object 3 is hidden by the other (occlusion region; overlapping region) in the measurement image. Here, if a region is present in which either the object 2 or the held object 3 is hidden by the holder 61 in the measurement image, the control unit 301 also determines this region as an occlusion region. If an occlusion region is present, processing proceeds to step S2005. If no occlusion region is present, processing proceeds to step S2007.

Note that in this embodiment, the robot control device 50 needs to control the orientation of the robot 60 so as to connect the object 2 to the held object 3. For this reason, processing in FIG. 4 (steps S2001 to S2009) is repeated until the collation device 30 determines that the object 2 and the held object 3 have been connected based on the results of recognizing the position-orientations of the object 2 and the held object 3.

The collation device 30 in this embodiment can determine (set) an occlusion region (region of non-interest) occurring between the object 2 and the held object 3 based on the estimated position-orientations of the object 2 and the held object 3. This makes it possible to prevent importance from being given to an occlusion region occurring between the object 2 and the held object 3 in the collation. Accordingly, the collation device 30 can recognize the position-orientation of the object 2 with higher accuracy. Moreover, the collation system 1 (object-moving system) enables the held object 3 to be connected to the object 2 with high accuracy.

In the above embodiments, the collation system 1 sets a region of non-interest and a region of interest (attention degree of each region) in accordance with an instruction from the user or based on a three-dimensional model, an occlusion region, or the like. However, a region of non-interest and a region of interest may alternatively be set by any other method. For example, the collation system 1 may also use, in subsequent recognition, a region of non-interest and a region of interest when a position-orientation close to the actual position-orientation of the object 2 was recognized, out of the results of recognizing the position-orientation of the object 2 by randomly setting a region of non-interest and a region of interest multiple times (exhaustively).

Note that the interpretation of the claims is not limited solely by the matters stated in the embodiments. The interpretation of the claims also encompass the scope described such that a person skilled in the art can recognize that the subject matter of the invention can be solved, while giving consideration to the technical common sense of the art at the time of filing.

### (Supplementary Note 1)

A template generation device (20) for generating a template that indicates a feature value of a predetermined object and is used by a collation device (30) for collating the template with a measurement image representing a result of measuring a measurement range including the predetermined object, the template generation device (20) comprising:
a first generation means (204) for generating a projection image representing the predetermined object as a two-dimensional image, based on a three-dimensional model of the predetermined object;
a feature value acquisition means (205) for acquiring, based on the three-dimensional model or the projection image, a feature value that has been corrected in accordance with an attention degree of each region of the three-dimensional model; and
a second generation means (206) for generating the template indicating the feature value corresponding to the projection image.

### (Supplementary Note 2)

A collation device (30) comprising:
an acquisition means (302, 303) for acquiring a measurement image representing a result of measuring a measurement range including a predetermined object, and a template indicating a feature value of the predetermined object;
an estimation means (301) for estimating a position-orientation of the predetermined object based on the measurement image;
a determination means (301) for determining, based on the position-orientation of the predetermined object estimated by the estimation means (301), an overlapping region in which the predetermined object overlaps another object in the measurement image;
an updating means (306) for updating the template so as to suppress a feature of a region in the template, the region corresponding to the overlapping region; and
a collation means (308) for collating the template updated by the updating means (306) with the measurement image.

### (Supplementary Note 3)

A template generation method for generating a template that indicates a feature value of a predetermined object and is used by a collation device (30) for collating the template with a measurement image representing a result of measuring a measurement range including the predetermined object, the template generation method comprising:
a first generating step (S1004) of generating a projection image representing the predetermined object as a two-dimensional image, based on a three-dimensional model of the predetermined object;
a feature value acquisition step (S1006) of acquiring, based on three-dimensional model or the projection image, a feature value that has been corrected in accordance with an attention degree of each region of the three-dimensional model; and
a second generating step (S1008) of generating the template indicating the feature value corresponding to the projection image.

### (Supplementary Note 4)

A collation method comprising:
an acquisition step (S2001) of acquiring a measurement image representing a result of measuring a measurement range including a predetermined object, and a template indicating a feature value of the predetermined object;
an estimation step (S2003) of estimating a position-orientation of the predetermined object based on the measurement image;
a determination step (S2004) of determining, based on the position-orientation of the predetermined object estimated in the estimation step, an overlapping region in which the predetermined object overlaps another object in the measurement image;
an updating step (S2006) of updating the template so as to suppress a feature of a region in the template, the region corresponding to the overlapping region; and
a collation step (S2007) of collating the template updated in the updating step with the measurement image.

### REFERENCE SIGNS LIST

1: Comparison system, 2: Object, 10: Image sensor, 20: Template generation device,
30: Comparison device, 40: Storage device, 201: Control device, 202: Information acquisition unit,
203: Region setting unit, 204: Projection image generation unit, 205: Feature value calculation unit,
206: Template generation unit, 207: Information output unit, 301: Control unit,
302: Image acquisition unit, 303: Information acquisition unit, 304: Feature value calculation unit,
305: Region setting unit, 306: Template updating unit, 307: Comparison unit,
308: Recognition unit, 309: Result output unit

## Claims

1. A template generation device for generating a template that indicates a feature value of a predetermined object and is used by a collation device for collating the template with a measurement image representing a result of measuring a measurement range including the predetermined object, the template generation device comprising:
a first generation means for generating a projection image representing the predetermined object as a two-dimensional image, based on a three-dimensional model of the predetermined object;
a feature value acquisition means for acquiring, based on the three-dimensional model or the projection image, a feature value that has been corrected in accordance with an attention degree of each region of the three-dimensional model; and
a second generation means for generating the template indicating the feature value corresponding to the projection image.

2. The template generation device according to claim 1, further comprising:
a setting means for setting a first region having an attention degree lower than an attention degree of another region in the three-dimensional model,
wherein the feature value acquisition means acquires a feature value obtained by suppressing a feature of the first region.

3. The template generation device according to claim 2,
wherein the setting means sets a region designated by a user as the first region.

4. The template generation device according to claim 2 or 3,
wherein if a proportion of a region having an identical feature in the predetermined object to the predetermined object is greater than or equal to a first value, the setting means sets the region as the first region.

5. The template generation device according to any one of claims 2 to 4,
wherein the setting means sets a second region having an attention degree higher than an attention degree of the first region in the three-dimensional model, and
the feature value acquisition means acquires a feature value obtained by enhancing a feature of the second region.

6. The template generation device according to claim 5,
wherein the setting means sets a region having an uneven shape as the second region.

7. The template generation device according to claim 5 or 6,
wherein if a proportion of a region having an identical feature in the predetermined object to the predetermined object is smaller than or equal to a second value, the setting means sets the region as the second region.

8. The template generation device according to any one of claims 1 to 7,
wherein the measurement image is a range image having pixels each representing a distance to a subject.

9. The template generation device according to any one of claims 1 to 8,
wherein the first generation means generates a plurality of the projection images each representing the predetermined object in a different orientation as a two-dimensional image, and
the second generation means generates the template for each of the plurality of projection images.

10. A collation system comprising:
the template generation device according to any one of claims 1 to 9; and
a collation device configured to collate the template generated by the template generation device with the measurement image.

11. The collation system according to claim 10,
wherein the collation device includes:
an estimation means for estimating a position-orientation of the predetermined object based on the measurement image;
a determination means for determining, based on the position-orientation of the predetermined object estimated by the estimation means, an overlapping region in which the predetermined object overlaps another object in the measurement image; and
an updating means for updating the template so as to suppress a feature of a region in the template, the region corresponding to the overlapping region.

12. A collation device comprising:
an acquisition means for acquiring a measurement image representing a result of measuring a measurement range including a predetermined object, and a template indicating a feature value of the predetermined object;
an estimation means for estimating a position-orientation of the predetermined object based on the measurement image;
a determination means for determining, based on the position-orientation of the predetermined object estimated by the estimation means, an overlapping region in which the predetermined object overlaps another object in the measurement image;
an updating means for updating the template so as to suppress a feature of a region in the template, the region corresponding to the overlapping region; and
a collation means for collating the template updated by the updating means with the measurement image.

13. A template generation method for generating a template that indicates a feature value of a predetermined object and is used by a collation device for collating the template with a measurement image representing a result of measuring a measurement range including the predetermined object, the template generation method comprising:
a first generating step of generating a projection image representing the predetermined object as a two-dimensional image, based on a three-dimensional model of the predetermined object;
a feature value acquisition step of acquiring, based on three-dimensional model or the projection image, a feature value that has been corrected in accordance with an attention degree of each region of the three-dimensional model; and
a second generating step of generating the template indicating the feature value corresponding to the projection image.

14. A collation method comprising:
an acquisition step of acquiring a measurement image representing a result of measuring a measurement range including a predetermined object, and a template indicating a feature value of the predetermined object;
an estimation step of estimating a position-orientation of the predetermined object based on the measurement image;
a determination step of determining, based on the position-orientation of the predetermined object estimated in the estimation step, an overlapping region in which the predetermined object overlaps another object in the measurement image;
an updating step of updating the template so as to suppress a feature of a region in the template, the region corresponding to the overlapping region; and
a collation step of collating the template updated in the updating step with the measurement image.

15. A program for causing a computer to execute the steps in the template generation method according to claim 13.

16. A program for causing a computer to execute the steps in the collation method according to claim 14.
